# EUROPÄISCHE PATENTANMELDUNG

(11) **EP 0 686 533 A1**
(43) Veröffentlichungstag der Anmeldung: **13.12.1995**
(21) Anmeldenummer: 95108415.1
(22) Anmeldetag: 01.06.1995
(51) Int. Cl.: B60R 21/32

(54) **Auslöseeinrichtung für Personenschutzvorrichtungen in Fahrzeugen**

(30) Priorität: 09.06.1994 DE 4420114
(71) Anmelder: TEMIC TELEFUNKEN microelectronic GmbH, D-74072 Heilbronn (DE)
(72) Erfinder: Spies, Hans, D-85276 Pfaffenhofen (DE)
(74) Vertreter: Maute, Hans-Jürgen, Dipl.-Ing.

(57) **Zusammenfassung**

Die vorliegende Erfindung bezieht sich auf ein Auslösegerät (1) für Schutzeinrichtungen (4 bis 9) in einem Fahrzeug (13), wobei nach Erkennen der Aufprallrichtung und Schwere des Crashs und in Abhängigkeit einer Sitzbelegungserkennung die entsprechenden Schutzeinrichtungen (4 bis 9) richtungsselektiv einzeln oder in Kombination aktiviert werden.

## Beschreibung

Die Erfindung bezieht sich auf eine Auslöseeinrichtung für Personenschutzvorrichtungen in Kraftfahrzeugen gemäß dem Gattungsbegriff des Anspruchs 1.

Personenschutzvorrichtungen in Kraftfahrzeugen sind in den verschiedensten Ausführungsformen und für die verschiedensten Zwecke bekannt. So sind die diversen Ausführungsformen von sogenannten Sicherheitsgurten heute in jedem Kraftfahrzeug serienmäßig eingebaut, die bei einem Frontalzusammenstoß sicherstellen sollen, daß die Fahrzeuginsassen in ihren Sitzen festgehalten werden und sich so keine oder nur geringe Verletzungen zuziehen können. Weiterhin sind die sogenannten Airbags allgemein bekannt, die bei einem Aufprall schlagartig ein Luftkissen bilden, das Brust und Kopf - vorzugsweise des Fahrzeuglenkers - vor Verletzungen am Lenkrad und an der Frontscheibe schützt.

Weiterhin ist beispielsweise durch die US 5 131 703 eine Kollisionsschutzeinrichtung bekanntgeworden, die auch vor einem seitlichen Aufprall schützen soll. Aus der DE 42 01 822 ist hierzu ein System zum Erkennen des seitlichen Stoßes auf ein Kraftfahrzeug bekannt, das als Sensor anzusprechen ist und bei einer Deformierung der seitlichen Karosseriewand anspricht. Aus der DE 40 23 109 ist ein aus mehreren Sensoren bestehendes Schutzsystem für Fahrzeuge bekannt, das zum Auslösen von Insassenschutzvorrichtungen die Sitzposition des zu Schützenden in Relation zur entsprechenden Schutzvorrichtung permanent mißt und aus dem Ergebnis dieser Messungen die Zeitpunkte und den Umfang der einzelnen Schutzmaßnahmen ableitet.

Trotz der zweifelsfreien Vorteile, die all diese Schutzeinrichtungen haben, ist es bisher erforderlich, daß sowohl für einen Frontalaufprall als auch für einen solchen von der Seite her jeweils ein eigenes Auslösegerät erforderlich ist, was zu recht hohen Kosten für derartige Sicherheitssysteme führt.

Der vorliegenden Erfindung liegt die Aufgabe zugrunde, eine Anordnung anzugeben, die zu einer kostengünstigen Lösung führt.

Diese Aufgabe wird dadurch gelöst, daß die Auslöseeinrichtung für die Frontschutzeinrichtung mit der Auslöseeinrichtung für die Seitenschutzeinrichtungen kombiniert wird, indem zur Detektion der Richtung eines Aufpralls und Erfassung seiner Intensität eine Steuerelektronik angeordnet, als Auslösegerät ausgebildet und mit allen Schutzeinrichtungen verbunden ist, um die Schutzeinrichtungen in Abhängigkeit der Signale von mindestens zwei Beschleunigungsaufnehmern und einer Sitzbelegungserkennung einzeln oder in Kombination auszulösen.

In einer Weiterbildung der Erfindung wird der Steuerelektronik ein Speicher hinzugefügt, in welchem solche Daten abgelegt sind, die für verschiedene Arten eines Aufpralls typisch sind. Im Falle eines möglichen Aufpralls werden die hierbei gemessenen Daten mit den gespeicherten verglichen und in Abhängigkeit des Vergleichsergebnisses in der Steuerelektronik entschieden, ob und ggf. welche Schutzeinrichtungen ausgelöst werden müssen.

Vorteilhaft ist die Auslöseeinrichtung mit einer kontinuierlich arbeitenden und anzeigenden Funktionsprüfeinrichtung versehen, um Funktionsstörungen oder -ausfälle sofort dem Fahrer anzuzeigen.

Die mit der Auslöseeinrichtung verbundene Sitzbelegungserkennung soll sicherstellen, daß die Schutzeinrichtungen nur bei den tatsächlich belegten Sitzen im Fall eines Aufpralls ausgelöst werden. Die Funktionsweise der Sitzbelegungserkennung kann auf mechanische, optische, elektrische oder auf daraus kombinierter Art und Weise erfolgen.

Die Vorteile der Erfindung liegen insbesondere darin, daß durch die Kombination mehrerer Auslöseeinrichtungen neben der Einsparung von Kosten einzelne, mehrere oder alle Schutzeinrichtungen gezielt ausgelöst werden können, um so den bestmöglichen Schutz für die Insassen bereitzustellen.

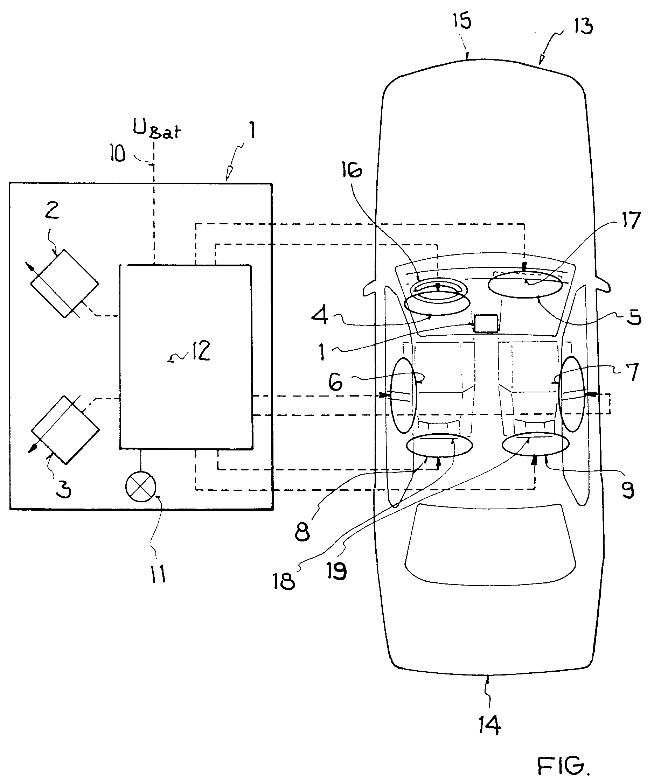

Ein Ausführungsbeispiel wird beschrieben und in der Figur der Zeichnungen skizziert.

Die Figur zeigt ein Schemabild bezüglich der Zusammensetzung des Auslösegerätes und seiner funktionellen Verknüpfung mit den Schutzeinrichtungen des Fahrzeugs.

Zu den Schutzeinrichtungen des Fahrzeugs 13 gehören der üblicherweise im Lenkrad 16 untergebrachte Fahrer-Airbag 4, der in der Beifahrerkonsole 17 eingebaute Beifahrer-Airbag 5, die Seitenairbags 6 und 7 und die beispielsweise in die Kopfstützen 18 bzw. 19 integrierten Airbags 8 bzw. 9.

Das skizzierte Auslösegerät 1 ist geschützt - vorzugsweise im Flächenzentrum des Fahrzeugs - angeordnet und dessen Steuerelektronik 12 einerseits mit den Schutzeinrichtungen 4 und 5 für den Frontalaufprall und den Schutzeinrichtungen 6 bzw. 7 für den Seitenaufprall und andererseits für den Heckaufprall mit den Sicherheits- bzw. Schutzeinrichtungen 8 und 9 verbunden. Die Steuerelektronik 12 ist mit Beschleunigungsaufnehmern 2 und 3 verknüpft und erhält von diesen Signale aus zwei unterschiedlichen Richtungen, die so ausgewertet werden, daß nicht nur die Richtung eines Aufpralles, sondern auch andere Ereignisse, wie beispielsweise eine starke Notbremsung, erkannt, unterschieden und gegebenenfalls zur Aktivierung der richtigen Maßnahmen für den Schutz der Passagiere verarbeitet werden.

In einem zur Steuerelektronik 12 gehörenden Speicher sind zuvor gemessene Daten der verschiedenen Arten eines Aufpralls abgelegt. Die im Verlauf einer Fahrt gemessenen Daten werden ständig mit den im Speicher abgelegten verglichen. Vom Ergebnis dieses Vergleichs hängt es ab, ob und ggf. welche der Sicherheitseinrichtungen 4 bis 9 ausgelöst werden, um den Schutz der Insassen zu gewährleisten. So wird bei einem Aufprall mit dem Bug 15 die Freigabe der Airbags 4 und 5 initiiert, bei einem direkten Seitenaufprall die Seitenairbags 6 bzw. 7 und bei einem Aufprall mit dem Heck 14 die Airbags 8 und 9 für den Kopf und/oder den Körper und bei einem Schrägaufprall in einem bestimmten Winkel die entsprechenden Schutzeinrichtungen; beispielsweise bei einem Schrägaufprall im Winkel von rund 45° von vorne rechts die Schutzeinrichtungen 4, 5 und 7; oder bei einem Schrägaufprall von hinten links, beispielsweise im Winkel von 40° zur Fahrzeuglängsachse die Schutzeinrichtungen 8, 9 und 6.

Wesentlicher Bestandteil der Auslöseeinrichtung ist eine Sitzbelegungserkennung, die beispielsweise in Form eines Druckstiftes unter jedem Passagiersitz ausgebildet ist (nicht gezeichnet) und die ihm zugeordnete entsprechende Schutzeinrichtung generell aktiviert, sobald ein Sitz belegt ist.

Diese Sitzbelegungserkennung kann mechanisch, optisch oder elektronisch konzipiert sein oder aus einer beliebigen Kombination hieraus bestehen.

Das zentral angeordnete Auslösegerät 1 umfaßt beispielsweise in einer schaltungsmäßigen Einheit (Single-Chip) nicht nur die Steuerelektronik 12, vorzugsweise mit Speicher, die Beschleunigungsaufnehmer 2 und 3 und die Sitzbelegungserkennung, sondern auch die Schnittstellen zu allen Sicherheitseinrichtungen, für die Stromversorgung 10 und die kontinuierlich arbeitende Funktionsprüfeinrichtung 11 mit optischer Anzeige.

Das Auslösegerät 1 ist in den ständigen Wartungsdienst des Fahrzeugs aufzunehmen, um einem Ausfallen der Auslöseeinheit, beispielsweise durch Korrosion an Steckverbindungen, rechtzeitig vorzubeugen.

## Patentansprüche

1. Auslöseeinrichtung für Personenschutzvorrichtungen in Fahrzeugen, die sowohl gegen Frontalaufprall als auch gegen Seitenkollisionen im Fahrzeug (13) angeordnet sind und durch den Aufprall aktiviert werden, dadurch gekennzeichnet, daß zur Detektion der Richtung eines Aufpralls und Erfassung seiner Intensität eine Steuerelektronik (12) angeordnet, als Auslösegerät (1) ausgebildet und mit Schutzeinrichtungen (4 ... 9) verbunden ist, um diese Schutzeinrichtungen (4 ... 9) in Abhängigkeit der Signale von mindestens zwei Beschleunigungsaufnehmern (2, 3) und einer Sitzbelegungserkennung einzeln oder in Kombination auszulösen.

2. Auslöseeinrichtung nach Anspruch 1, dadurch gekennzeichnet, daß in einem zur Steuerelektronik (12) gehörenden Speicher solche Daten abgelegt sind, die für die verschiedenen Arten eines Aufpralls typisch sind und daß diese im Moment eines tatsächlichen Aufpralls mit den dabei gemessenen Daten verglichen werden, um zu entscheiden, ob und ggf. welche Schutzeinrichtungen (4 ... 9) auszulösen sind.

3. Auslöseeinrichtung nach Anspruch 1 oder 2, dadurch gekennzeichnet, daß die Steuerelektronik (12) mit einer kontinuierlich arbeitenden und anzeigenden Funktionsprüfeinrichtung (11) versehen ist.

4. Auslöseeinrichtung nach einem der vorangegangenen Ansprüche, dadurch gekennzeichnet, daß die Sitzbelegungserkennung auf mechanische, optische, elektrische Weise oder in einer Kombination hieraus ermittelt, welche Sitzplätze belegt sind.
